(19)

**Europäisches Patentamt**
**European Patent Office**
**Office européen des brevets**

(11) **EP 4 778 688 A2**

(12) # EUROPEAN PATENT APPLICATION

(43) Date of publication:
**22.07.2026 Bulletin 2026/30**

(21) Application number: **25224698.8**

(22) Date of filing: **17.12.2025**

(51) International Patent Classification (IPC):
*B28B 1/00* (2006.01)     *B22F 10/43* (2021.01)
*B22F 10/47* (2021.01)     *B22F 10/66* (2021.01)
*B28B 11/12* (2006.01)     *B28B 17/00* (2006.01)
*B29C 64/153* (2017.01)    *B29C 64/35* (2017.01)
*B29C 64/40* (2017.01)     *B33Y 10/00* (2015.01)
*B33Y 30/00* (2015.01)     *B33Y 40/20* (2020.01)
*B33Y 70/00* (2020.01)     *B24C 3/32* (2006.01)

(52) Cooperative Patent Classification (CPC):
**B33Y 10/00; B22F 10/43; B22F 10/47; B22F 10/66;**
**B24C 3/32; B28B 1/001; B28B 11/12;**
**B28B 17/0081; B29C 64/153; B29C 64/35;**
**B29C 64/40; B33Y 30/00; B33Y 40/20;**
**B33Y 70/00;** C04B 2235/6026

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.12.2024 JP 2024227342**
**07.03.2025 JP 2025036093**

(71) Applicant: **Canon Kabushiki Kaisha**
**Tokyo, 146-8501 (JP)**

(72) Inventors:
• **FUNATANI, Kazuhiro**
  **Tokyo, 146-8501 (JP)**
• **AMANO, Shota**
  **Tokyo, 146-8501 (JP)**
• **COURQUIN, Rika**
  **Tokyo, 146-8501 (JP)**
• **NISHIKAWA, Koji**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **METHOD OF MANUFACTURING THREE DIMENSIONAL SHAPED OBJECT AND PRODUCT**

(57)     Provided is a method of manufacturing a three-dimensional shaped object, the method including: a layering-and-shaping step of forming a layered-and-shaped object by layering-and-shaping using a ceramic powder, the layered-and-shaped object including a first part (1) and a second part (2) positioned in the vicinity of the first part (1); and a removal step of removing the second part (2) of the layered-and-shaped object while leaving the first part (1) thereof by blasting for causing media to collide against the layered-and-shaped object. The media have a Young's modulus lower than a Young's modulus of the first part (1).

FIG. 1

EP 4 778 688 A2

## Description

TECHNICAL FIELD

The present technology relates to a method of manufacturing a three-dimensional shaped object.

BACKGROUND

A technology for manufacturing a three-dimensional shaped object by using a layering-and-shaping system has become widespread in applications involving production of prototypes in a short period of time or manufacture of a small number of parts. The layering-and-shaping system enables direct formation without the need for a mold. Thus, a three-dimensional shaped object can be obtained with high accuracy in a short period of time. Further, the layering-and-shaping system enables the formation of a three-dimensional shaped object based on three-dimensional data generated by using a design tool such as three-dimensional CAD. Thus, the layering-and-shaping system has advantages in that design change is easy and a three-dimensional shaped object having a complex and intricate shape can be manufactured.

Further, in recent years, there has been proposed a layering-and-shaping method using a ceramic material powder as a material.

In layering-and-shaping, when an article to be finally obtained (which may hereinafter be referred to as "main body") has a partially outwardly extending shape, that is, a so-called overhang shape, it is common to form a three-dimensional shaped object including, in addition to the main body, a support for supporting the overhang portion. Further, when a shape of the main body is complex and intricate, the main body is liable to break during the formation. Thus, a support for supporting the complex and intricate portion is formed in some cases. A support having a slender columnar shape, a lattice shape, or the like is typically used as the support. After the completion of the three-dimensional shaped object, the supports are not required and hence are removed with a tool or the like.

In Japanese Patent Laid-Open No. 2018-095946 and Japanese Patent Laid-Open No. 2016-113701, there is disclosed a configuration for removing an unrequired part adhering to a shaped object made of a metal material or a resin material, by blasting.

SUMMARY

In order to separate a three-dimensional shaped object formed on a build plate from the build plate, the three-dimensional shaped object is only required to be cut off with a wire saw or the like. However, when the support provided to the main body is removed with a tool (such as a hand grinder or a wire saw), the following issues arise. The first issue lies in that removal of the support with high accuracy in accordance with a shape of the main body is difficult. The second issue lies in that accidental contact of the tool with the main body may break the main body. In particular, the main body is liable to break when a ceramic material, which is a brittle material, is used. Thus, there arise problems in that, for example, the quality of the main body degrades, and the shape of the main body is restricted to a shape that allows the use of a tool.

The present disclosure has been made in view of the problems described above, and is directed to providing a technology suitable for removing an unrequired part from a ceramic shaped object.

The present disclosure in its first aspect provides a method of manufacturing a three-dimensional shaped object as specified in claim 1. Optional features are specified in claims 1 to 15.

The present disclosure in its second aspect provides a product as specified in claim 16. Optional features are specified in claims 17 and 18.

According to the present disclosure, it is possible to provide a technology advantageous for appropriately removing an unrequired part from a ceramic shaped object.

Features of the present disclosure will become apparent from the following description of embodiments with reference to the attached drawings. The following description of embodiments is described by way of example.

BRIEF DESCRIPTION OF THE DRAWINGS

Fig. 1 is a schematic sectional view for illustrating one example of a three-dimensional shaped object before removal of a support.

Fig. 2A is a schematic sectional view for illustrating an example of the support.

Fig. 2B is a schematic sectional view for illustrating an example of the support.

Fig. 3 is a schematic sectional view for illustrating one example of the support having a lattice shape.

Fig. 4A is a conceptual diagram for illustrating one example of one step in a layering-and-shaping step using powder bed fusion.

Fig. 4B is a conceptual diagram for illustrating one example of one step in the layering-and-shaping step using the powder bed fusion.

Fig. 4C is a conceptual diagram for illustrating one example of one step in the layering-and-shaping step using the powder bed fusion.

Fig. 4D is a conceptual diagram for illustrating one example of one step in the layering-and-shaping step using the powder bed fusion.

Fig. 4E is a conceptual diagram for illustrating one example of one step in the layering-and-shaping step using powder bed fusion.

Fig. 4F is a conceptual diagram for illustrating one example of one step in the layering-and-shaping step using the powder bed fusion.

Fig. 4G is a conceptual diagram for illustrating one example of one step in the layering-and-shaping step using the powder bed fusion.

Fig. 4H is a conceptual diagram for illustrating one example of one step in the layering-and-shaping step using the powder bed fusion.

Fig. 5 is a schematic view for illustrating one example of a blasting apparatus.

Fig. 6A is a diagrammatic view for illustrating behavior of a target object to be subjected to blasting.

Fig. 6B is a diagrammatic view for illustrating behavior of the target object to be subjected to blasting.

Fig. 7 is a flowchart for illustrating one example of a manufacturing method according to this embodiment.

Fig. 8A is a schematic view for illustrating a shaped object for evaluation, which was manufactured in Examples.

Fig. 8B is a schematic view for illustrating a shaped object for evaluation, which was manufactured in Examples.

DESCRIPTION OF THE EMBODIMENTS

Embodiments for implementing the technology according to the present disclosure are described below with reference to the drawings. However, the present disclosure is by no means limited to the following specific examples or drawings. In this embodiment, an apparatus using powder bed fusion is described as an example. However, a three-dimensional shaping apparatus using another method may be used instead.

A method of manufacturing a three-dimensional shaped object of this embodiment includes: a layering-and-shaping step of forming a layered-and-shaped object by layering-and-shaping using a ceramic powder, the layered-and-shaped object including a first part and a second part positioned in the vicinity of the first part; and a removal step of removing the second part of the layered-and-shaped object while leaving the first part thereof by blasting for causing media to collide against the layered-and-shaped object.

<Three-Dimensional Shaped Object (Layered-and-Shaped Object)>

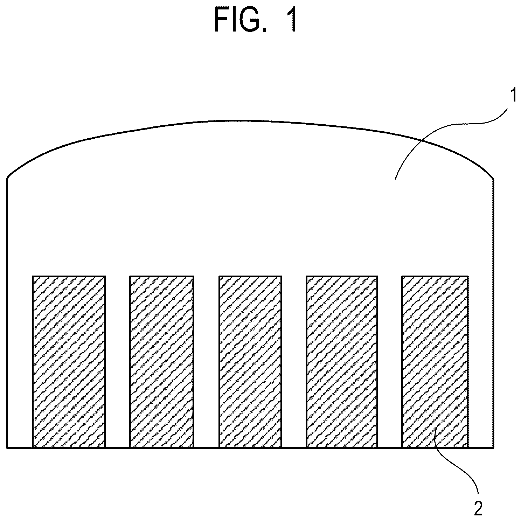

Fig. 1 is a schematic sectional view for illustrating one example of a three-dimensional shaped object before removal of a support. In this embodiment, a three-dimensional shaped object including: a first part 1; and a second part 2 in the vicinity thereof, as illustrated in Fig. 1, is formed. Here, the first part 1 corresponds to a main body (article to be finally obtained), and the second part 2 corresponds to a support. According to this embodiment, it is possible to provide a method of manufacturing a three-dimensional shaped object, which enables removal of a support being an unrequired part while suppressing, for example, degradation in quality of the article due to breakage of a main body portion, or deterioration of performance of the article due to restriction on a shape of the main body portion.

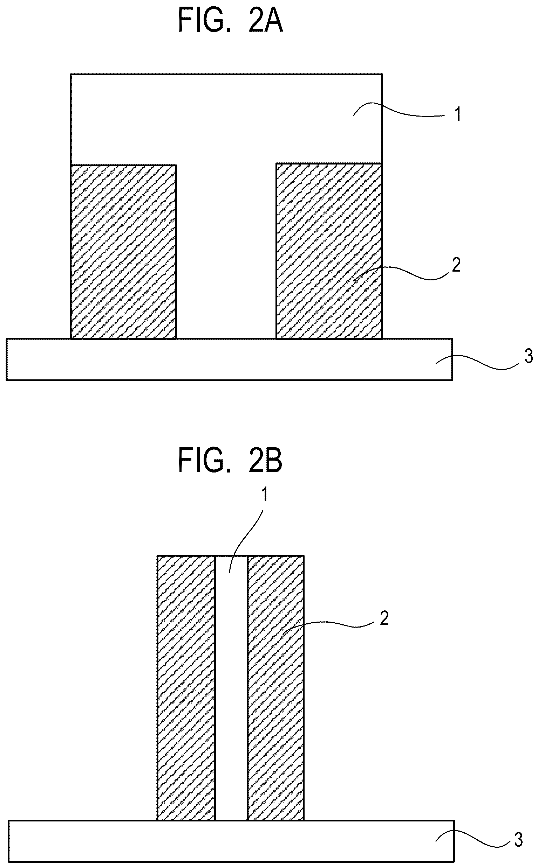

Fig. 2A and Fig. 2B are schematic sectional views for illustrating an example of the support being the second part. For example, as illustrated in Fig. 2A, the support (second part) 2 is formed in a shape for supporting a bottom part of an overhang portion of the main body (first part) 1 on a build stage 3. In this case, the main body 1 and the support 2 are formed so that the bottom part of the overhang portion of the main body 1 and the support 2 are in contact with each other.

Further, for example, as illustrated in Fig. 2B, the support 2 is formed on the build stage 3 so as to surround the main body 1 having a slender columnar shape or a thin sheet-like shape. When powder is spread over the build stage 3 with a recoater, a load is applied to the three-dimensional shaped object that is being formed. This load may break the main body 1 having a slender columnar shape or a thin sheet-like shape. Thus, the main body 1 having a slender columnar shape or a thin sheet-like shape is surrounded by the support 2 so that the load is not transmitted to the main body 1 having a slender columnar shape or a thin sheet-like shape to thereby prevent breakage. In this case, the support 2 and the main body 1 having a slender columnar shape or a thin sheet-like shape may be in close contact with each other, or may be spaced apart from each other so as to improve support removability in a later step. A distance between the support 2 and the main body 1 having a slender columnar shape or a thin sheet-like shape may be, for example, 5 mm or less or 3 mm or less. Breakage of the main body 1 having a slender columnar shape or a thin sheet-like shape can be prevented by setting the distance between the support 2 and the main body 1 having a slender columnar shape or a thin sheet-like shape to, for example, 5 mm or less.

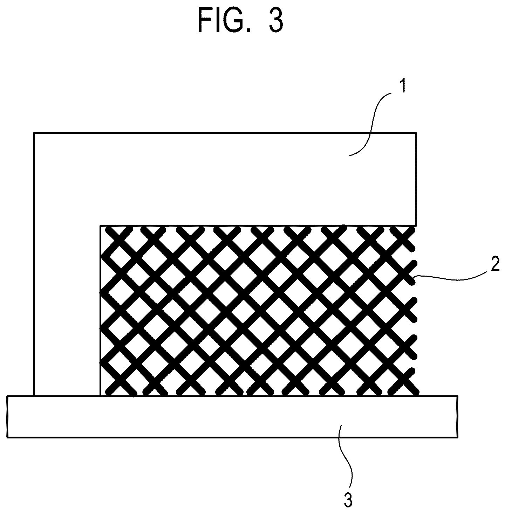

The support 2 in this embodiment can be formed by, for example, depositing layers each formed by uniformly irradiating a predetermined region under predetermined laser conditions. However, a method of forming the support 2 is not limited thereto. In a typical three-dimensional shaping process using a metal material or a resin material, the support 2 having a slender columnar shape, a lattice shape, or the like is used. Fig. 3 is a schematic sectional view for illustrating one example of the support having a lattice shape. However, ceramics is a brittle material, and is not elastically deformed under a load that is applied thereto by a powder-spreading member when powder is spread during the formation. Thus, a slender column or a lattice may break, and thus may fail to function as the support in some cases. Accordingly, it is preferred that at least a surface of the support 2 that faces the main body 1 have a uniform structure.

<Layering-and-Shaping Step>

In a layering-and-shaping step, the layered-and-shaped object including: the first part; and the second part positioned in the vicinity of the first part is formed by layering-and-shaping manufacture using a ceramic powder. The ceramic powder used for the formation is composed of a large number of ceramic particles. It is preferred that the layering-and-shaping step be a step using powder bed fusion. The powder bed fusion may be selective laser sintering (SLS), multi jet fusion (MJF), or selective laser melting (SLM). However, it is preferred that the step use SLM or SLS.

The ceramic powder used in this embodiment is suitably used for an additive shaping method. The additive shaping method involves irradiation of the ceramic powder with a laser beam in accordance with slice data that is generated based on three-dimensional data of a ceramic shaped object to be manufactured. In this embodiment, a method using a laser beam is described. Specifically, the ceramic powder in this embodiment is used in a manufacturing method using powder bed fusion. In a manufacturing process, a placing step and an irradiation step described below are alternately performed a plurality of times to manufacture a ceramic shaped object.

The method of manufacturing a ceramic shaped object according to this embodiment includes: the placing step of placing a ceramic powder on a base; and the irradiation step of obtaining an intermediate shaped object by irradiating part or entirety of the ceramic powder with a laser beam to fuse and solidify ceramic particles of the area irradiated with the laser beam.

When the powder bed fusion is used to form the shaped object, the placing step and the irradiation step are achieved by spreading and leveling the ceramic powder over a base material to a predetermined thickness and then irradiating the ceramic powder with a laser beam.

It is preferred that a layering-and-shaping step in this embodiment include: a placing step of placing the ceramic powder; a step of forming the main body by irradiating the ceramic powder with a laser beam; and a step of forming the support by irradiating the ceramic powder with a laser beam.

It is preferred that the ceramic powder in this embodiment be a ceramic-based powder. The ceramic-based powder is only required to contain ceramics as a main component, and may further contain a secondary component. Examples of the secondary component include a sintering aid component, an absorber component, and a component that can form a eutectic with a main component. The term "ceramics" as used herein refers to a solid inorganic compound except for metals regardless of a bonding state of the solid. The term "inorganic compound" as used herein refers to oxides, nitrides, oxynitrides, carbides, or borides, each containing one or more kinds of elements of an element group including: elements of Group 1 to Group 14 other than hydrogen; antimony; and bismuth.

The ceramic powder in this embodiment may be formed of one kind of inorganic compound, or may be a mixture of two or more kinds of inorganic compounds. The ceramic-based powder is a powder containing ceramics at 90 mol% or more. When the ceramic-based powder contains a plurality of kinds of ceramics, a total amount thereof is only required to be 90 mol% or more.

As the ceramic powder of this embodiment, a combination of base material particles corresponding to a main component and a material that absorbs a laser beam to generate heat may be used. A median particle diameter of the base material particles is preferably 1 $\mu$m or more and 200 $\mu$m or less, more preferably 10 $\mu$m or more and 100 $\mu$m or less. It is preferred that a median particle diameter of the material that absorbs a laser beam to generate heat be smaller than that of the base material particle. When the base material particles have a function of absorbing a laser beam to generate heat, the base material particles can also be used alone.

A wavelength of the laser beam used for shaping is not limited. As the laser beam, for example, a laser beam having a wavelength of about 1,000 nm from an Nd: YAG laser, a Yb fiber laser, or the like can be suitably used. It is preferred that the ceramic powder in this embodiment contain a component that absorbs a laser beam having a wavelength of about 1,000 nm to generate heat. It is preferred that the laser beam, which has been adjusted to a desired size such as a diameter of from 10 $\mu$m to 2 mm, be used for shaping in terms of improvement in shaping accuracy. A focal point size is one of parameters that affect the shaping accuracy. In order to achieve the shaping accuracy of 100 $\mu$m (0.1 mm), it is preferred that a line width be substantially the same and the focal point size be a diameter of 100 $\mu$m or less although the beam width and the focal point size depend on the situation. The laser beam may be radiated continuously or in a pulsed manner.

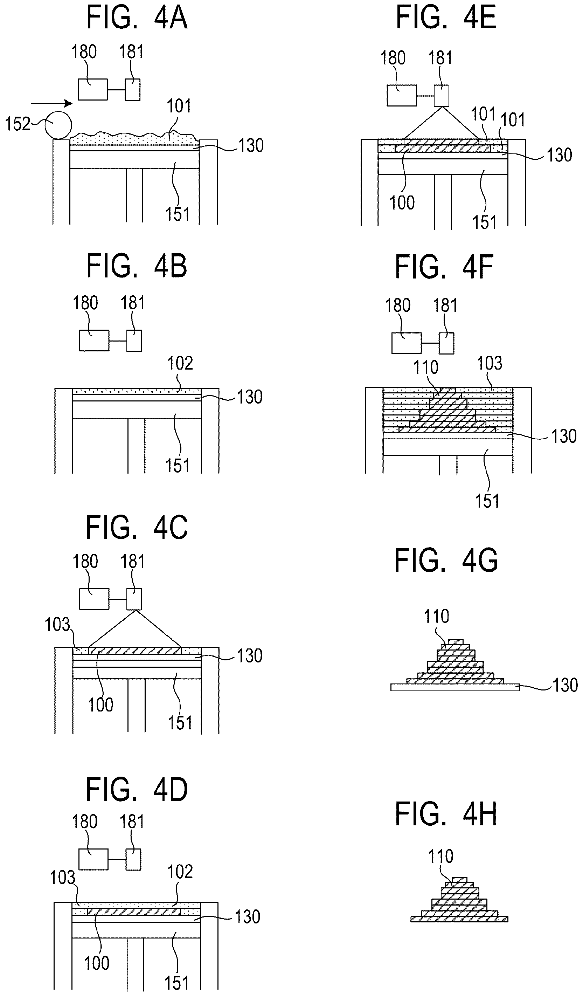

Fig. 4A to Fig. 4H are conceptual diagrams for illustrating one example of the layering-and-shaping step using the powder bed fusion (infrared laser fusion). A basic formation flow in the layering-and-shaping step using the infrared laser fusion is described with reference to Fig. 4A to Fig. 4H.

As illustrated in Fig. 4A, powder 101 is first placed on a base 130 installed on a stage 151, and is spread and leveled to a predetermined thickness with a roller 152 to thereby form a powder layer 102 as illustrated in Fig. 4B. In this case, a powder for forming the main body and a powder for forming the support may be the same as or different from each other, but are preferably the same as each other. As illustrated in Fig. 4C, the powder layer 102 is irradiated with a laser beam emitted from a laser light source 180 while being scanned with a scanner portion 181 based on slice data generated from shape data of a desired three-dimensional model. In this case, laser irradiation conditions for forming the main body and laser irradiation conditions for forming the support may be the same as or different from each other, but are preferably different from each other. In an area irradiated with a laser beam, a raw-material powder is fused and then solidified to form a solidified portion 100 corresponding to slice data for one layer. In an area that is not irradiated with a laser beam, unsolidified powder 103 remains. Subsequently, as illustrated in Fig. 4D, the stage 151 is lowered, and a new powder layer 102 is formed on the solidified portion 100 and the unsolidified powder 103. As illustrated in Fig. 4E, the new powder layer 102 is irradiated with a laser beam based on the slice data. As illustrated in Fig. 4F, a series of those steps are repeated the number of times in accordance with the slice data to thereby form a three-dimensional shaped object 110. Finally, as illustrated in Fig. 4G, the unsolidified powder 103 is removed. As illustrated in Fig. 4H, the three-dimensional shaped object 110 and the base 130 are separated from each other.

<Removal Step>

The removal step is a step of removing the second part of the layered-and-shaped object while leaving the first part thereof by blasting, by causing media to collide against the layered-and-shaped object. The media used in the blasting are composed of a large number of media particles.

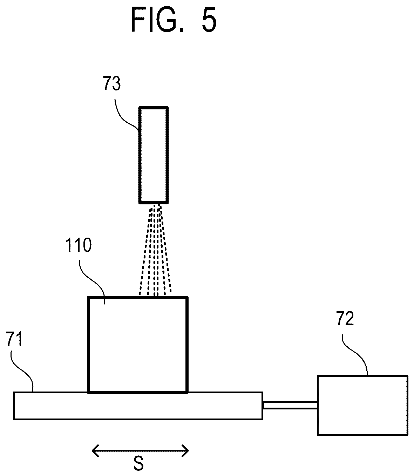

Fig. 5 is a schematic view for illustrating one example of a blasting apparatus. The blasting apparatus includes a stage 71, a drive device 72, and a nozzle 73. The stage 71 supports the shaped object. The drive device 72 is connected to the stage 71, and moves the stage 71 in directions S. The drive device 72 is, as one example, a servo cylinder. The nozzle 73 is fixedly arranged so as to be opposed to the stage 71. The nozzle 73 jets the media together with air onto a surface of the shaped object on the stage 71. The nozzle 73 is, as one example, a direct-pressure air nozzle. The blasting apparatus 70 includes a controller (not shown) that controls a driving amount of the drive device 72 and a jet pressure of the nozzle 73. The controller controls the driving amount of the drive device 72 and the jet amount of the nozzle 73. As a result, blasting can be performed at a predetermined position on the shaped object for a predetermined period of time.

The media comprises media particles of a material that can be selected from various materials such as resins, metals, and ceramics. Examples of the resin that can be used include acrylic, polycarbonate, nylon, and polyester. Examples of the metal that can be used include iron, stainless steel, zinc, aluminum, and copper. Examples of the ceramics that can be used include silicon carbide, alumina, zircon, and glass. Further, the median particle diameter of the media varies from several micrometers to several millimeters, and can be appropriately selected in accordance with a shape or aim.

The blasting apparatus is not limited to the apparatus illustrated in Fig. 5. For example, the nozzle 73 may be configured to move relative to the stage 71. In this case, the blasting apparatus is not required to include the drive device 72. Further, the blasting apparatus may have a configuration without the stage 71 and the drive device 72, in which the shaped object is manually supported and moved. The nozzle 73 may be a suction air nozzle. The drive device 72 may be a hydraulic cylinder or an air cylinder.

Blasting conditions in this embodiment are set so that the support can be removed at a predetermined speed.

Typically, blasting enables processing at a predetermined position on a target object. However, main bodies formed by three-dimensional shaping have a complex shape in many cases, and the three-dimensional shaped object tends to have a configuration in which the main body and the support are intricately combined. In this case, it is difficult to cause the media to collide against only the support which is to be removed. Thus, during blasting, the media collide against both the main body and the support.

In order to remove only the support while causing the media to collide against both the main body and the support, it is required that only the support be selectively broken by blasting. The present inventors have found that this requirement can be successfully achieved by imparting characteristics to Young's moduli of the main body and the media, preferably also to a Young's modulus of the support. A method of measuring the Young's modulus in this embodiment is described later. The Young's modulus of each of the main body and the support in this embodiment is not a Young's modulus of a structural body but a Young's modulus of the material.

The present inventors have found that it is effective to set the Young's modulus of the media lower than the Young's modulus of the main body in order to selectively break only the support. When the Young's modulus of the media used for blasting is lower than the Young's modulus of the main body, the main body is not abraded even when the media collide against the main body during blasting. Thus, only the support can be selectively broken. The Young's modulus of the media may be lower than the Young's modulus of the support.

Further, the present inventors have found that it is desirable that a difference between the Young's modulus of the media and the Young's modulus of the main body be 30 [GPa] or more. When a difference between the Young's modulus of the media and the Young's modulus of the main body is 30 [GPa] or more, only the support can be selectively broken while damage to the main body is further suppressed. A larger difference between the Young's modulus of the media and the Young's modulus of the main body is more advantageous in selectivity, and it is preferred that a difference between the Young's modulus of the media and the Young's modulus of the main body be 50 [GPa] or more. When a difference between the Young's modulus of the media and the Young's modulus of the main body is set extremely large, a significant restriction may arise in buildability of the main body, or considerable time may be required for processing of the support. In these regards, a difference between the Young's modulus of the media and the Young's modulus of the main body is preferably set to, for example, 470 [GPa] or less, and may be 300 [GPa] or less.

Further, the present inventors have found that it is desirable that the Young's modulus of the media be 20 [GPa] or less. When the Young's modulus of the media is 20 [GPa] or less, only the support can be selectively broken while damage to a fine structure such as an edge portion or a thin plate of the main body is further suppressed. When the Young's modulus of the media is extremely small, the media are excessively soft. Thus, even when the media collide against the support, it is difficult to apply a force to the support. Thus, considerable time may be required for the processing of the support. In terms of efficiency in the removal of the support, the Young's modulus of the media is preferably, for example, 0.1 [GPa] or more, and may be 1 [GPa] or more.

Further, the present inventors have found that it is desirable that the Young's modulus of the main body be 50 [GPa] or more. When the Young's modulus of the main body is 50 [GPa] or more, strength of the edge portion of the main body is increased. As a result, only the support can be selectively broken while damage to a fine structure such as the edge portion or the thin plate of the main body is further suppressed. A higher Young's modulus of the main body allows more reliable suppression of damage. Thus, it is preferred that the Young's modulus of the main body be 100 [GPa] or more. When the Young's modulus of the main body is set extremely large, a significant restriction on the buildability of the main body and/or the support may arise. The Young's modulus of the main body that is suitable in terms of the buildability of the main body and/or the support is preferably, for example, 500 [GPa] or less or 470 [GPa] or less, and may be 300 [GPa] or less.

Further, the present inventors have found that it is desirable that the media be made of a resin material. A resin typically has an elastic structure. Thus, only the support can be selectively broken while damage to a fine structure such as the edge portion or the thin plate of the main body is further suppressed. Further, in a ceramic shaping process, strength of the main body is increased by baking the main body. Thus, even when the media, which are made of a resin material, remain on the main body, the media disappear during baking. Thus, the main body is not contaminated.

Further, the present inventors have found that it is desirable that the median particle diameter of the media be 3 mm or less. A smaller median particle diameter of the media enables removal of the support from a fine structure such as a smaller hole, gap, or recess. As the median particle diameter of the media decreases, accuracy of removal of the support is enhanced. Thus, the median particle diameter of the media is preferably 1 mm or less, and may be 0.5 mm or less. When the median particle diameter of the media is extremely small, kinetic energy of the media is excessively small. Thus, even when the media collide against the support, it is difficult to apply a force to the support, and considerable time is required for the processing of the support in some cases. In terms of efficiency in the removal of the support, the median particle diameter of the media is, for example, preferably 0.01 mm or more, also preferably 0.05 mm or more, and may be 0.1 mm or more. A method of measuring the median particle diameter in this embodiment is described later.

Further, the present inventors have found that a circularity of the media particles is desirably 0.75 or more and 1 or less, more desirably 0.80 or more and 1 or less. When the media particles have a circularity of 0.75 or more, the shape of the media particles is close to a sphere without edges, and thus abrasivity is smaller. Accordingly, damage to the main body can be suppressed during blasting.

<Internal Structure of Support (Second Part)>

The main body is an article to be left, and is required to have strength so as not to be broken. Thus, in order to obtain sufficient strength, it is preferred that the main body be formed so as to have fewer internal pores. Meanwhile, the support is required to be removed after its completion. Accordingly, it is preferred that the support be formed so as to be easily broken by increasing internal pores. The pores of the main body and the pores of the support, which are different from each other, can be achieved by changing shaping conditions.

The support is required to be removed from the three-dimensional shaped object that has been completed. In this embodiment, the support is removed by blasting for causing the collision of the media.

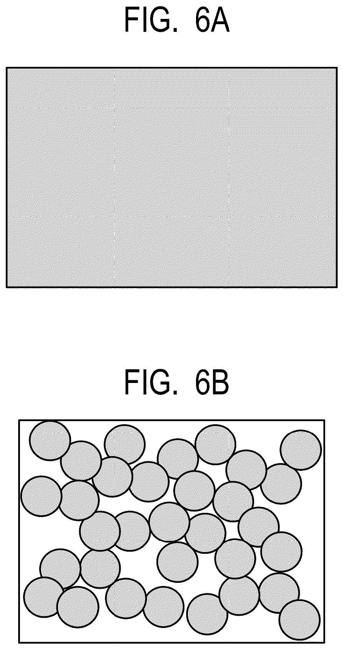

Behavior of a target object to be subjected to blasting is described with reference to Fig. 6A and Fig. 6B. Fig. 6A and Fig. 6B are diagrammatic views for illustrating the behavior of the target object to be subjected to blasting. Fig. 6A shows a state in which the target object has no internal pores, as one example of a case in which the target object includes dense particles and has few internal pores. Fig. 6B shows a state in which the target object includes coarse particles and has internal pores. The pore may be an isolated pore or a communication hole formed by interconnection of a plurality of pores.

It is preferred that the support have a structure with internal pores as illustrated in Fig. 6B, in other words, with a large number of cracks (internal defects). In this case, when the support is subjected to impact caused by the collision of media during blasting, stress concentration occurs under the influence of cracks, causing brittle fracture. That is, the support is broken. As a result, the support is removed through blasting.

Meanwhile, it is preferred that the main body have a structure with few internal pores as illustrated in Fig. 6A, in other words, with few cracks. In this case, even when the main body is subjected to impact caused by the collision of media during blasting, stress concentration is less liable to occur, and brittle fracture is less easily caused. That is, the main body is less easily broken. As a result, the main body is not removed through blasting.

As described above, when the shaped object is subjected to blasting, only the support can be more selectively removed.

When the structure illustrated in Fig. 6B is made of a metal material or a resin material and blasting is performed, the target object is plastically deformed under the impact applied by the media, and brittle fracture is less easily caused. Thus, when a metal material or a resin material is used, it is difficult to remove the support as illustrated in Fig. 6B through blasting.

The present inventors have found that imparting a characteristic to an internal structure of the support, in particular, to a surface area of the pores is effective for selectively breaking only the support through blasting. Further, the present inventors have found that it is suitable to measure a sum of perimeters of pore portions in a cross section of the main body and a sum of perimeters of pore portions in a cross section of the support as indices, each indicating a state of the surface area of the pores. A method of measuring the sum of the perimeters of the pore portions in the cross section of the main body and the sum of the perimeters of the pore portions in the cross section of the support in this embodiment is described later.

Further, the present inventors have found that setting the sum of the perimeters of the pore portions in the cross section of the support larger than the sum of the perimeters of the pore portions in the cross section of the main body is effective for selectively breaking only the support.

In this embodiment, the main body and the support can be formed so as to have different internal structures by controlling the shaping conditions such as the laser irradiation conditions. The main body is required to have sufficient strength. Thus, it is preferred that the main body be formed so as to have a dense structure with few internal pores as illustrated in Fig. 6A. Meanwhile, it is preferred that the support be formed so as to have a structure with internal pores as illustrated in Fig. 6B. Therefore, it is preferred that a porosity of the support is higher than a porosity of the main body.

Further, the present inventors have found that it is desirable that the sum of the perimeters of the pore portions in the cross section of the support be 7,000 $\mu$m/mm$^2$ or more. The sum of the perimeters of the pore portions in the cross section of the support is an index indicative of porosity of the support. As a numerical value of the sum becomes larger, the number of pores increases and the shapes of the pores become more complex. When the sum of the perimeters of the pore portions in the cross section of the support is 7,000 $\mu$m/mm$^2$ or more, the support has a structure with a larger number of boundaries between particles in the support. As a result, when the media are caused to collide against the support to apply impact during blasting, the number of portions at which stress concentration occurs increases. Thus, brittle fracture is more easily caused. As the value of the sum of the perimeters of the pore portions in the cross section of the support becomes larger, the support is more easily broken. Thus, the sum of the perimeters of the pore portions in the cross section of the support is preferably 10,000 $\mu$m/mm$^2$ or more, more preferably 20,000 $\mu$m/mm$^2$ or more. In terms of the buildability of the support, the sum of the perimeters of the pore portions in the cross section of the support is, for example, preferably 100,000 $\mu$m/mm$^2$ or less, more preferably 80,000 $\mu$m/mm$^2$ or less, 75,000 $\mu$m/mm$^2$ or less, and 70,000 $\mu$m/mm$^2$ or less, and may be 50,000 $\mu$m/mm$^2$ or less.

A method of setting the sum of the perimeters of the pore portions in the cross section of the support to 7,000 $\mu$m/mm$^2$ or more is described taking a case using the powder bed fusion as an example.

The powder bed fusion involves irradiating spread powder with a laser beam to fuse the powder so as to form the main body or the support. After that, a process of spreading powder and a process of irradiating the powder with a laser beam are repeated. It is typically ideal to set a thickness of each layer of spread powder to tens of micrometers and fuse the powder layer having such a thickness. The laser irradiation conditions for melting the powder are often set in consideration of an energy density. When the energy density is high, fusing can be promoted. When the energy density is low, fusing may be insufficient. Thus, an optimal energy density for melting the powder layer is set.

When the powder layer is fused, heat is typically conducted through the material to reheat the main body or the support, which has already been formed. The present inventors have found that reheating slightly promotes the fusing of the support portion, and thus reduces the amount of pores, resulting in difficulty in breaking the support through blasting, in some cases.

The present inventors have found that the influence on the support portion varies depending on the laser irradiation conditions even when the same energy density is applied. For example, when a predetermined value of energy density is to be applied during shaping, "low laser output and low laser scanning speed" conditions and "high laser output and high laser scanning speed" conditions are both conceivable. Under the "low laser output and low laser scanning speed" conditions, a time period during which the material is generating heat due to laser irradiation becomes longer. Thus, heat conduction time also becomes longer, and hence the main body or the support, which has already been formed, is easily reheated. As a result, fusing of the support portion slightly proceeds due to reheating, and hence the amount of pores may be reduced in some cases. Meanwhile, under the "high laser output and high laser scanning speed" conditions, a time period during which the material is generating heat due to laser irradiation becomes shorter. Thus, heat conduction time becomes shorter, and hence the support that has already been formed is less liable to be reheated. As a result, fusing of the support portion due to reheating can be suppressed, and the amount of pores can be maintained.

Further, the present inventors have found that it is desirable that the sum of the perimeters of the pore portions in the cross section of the support be set larger than the sum of the perimeters of the pore portions in the cross section of the main body by 2,000 $\mu$m/mm$^2$ or more. When the sum of the perimeters of the pore portions in the cross section of the support is larger than the sum of the perimeters of the pore portions in the cross section of the main body by 2,000 $\mu$m/mm$^2$ or more, a difference in susceptibility to brittle fracture between the main body and the support is larger. As a result, fragility of the main body is sufficiently smaller than that of the support. Thus, the support can be removed while damage to the main body is further suppressed. In order to set the sum of the perimeters of the pore portions in the cross section of the support larger than the sum of the perimeters of the pore portions in the cross section of the main body by 2,000 $\mu$m/mm$^2$ or more, it is only required that the pores of the main body be reduced. In order to reduce the pores of the main body, it is only required that, for example, the shaping conditions or the median particle diameter of the ceramic powder be adjusted. For example, it is only required that a material having a small median particle diameter be selected as the powder of a ceramic material. As a difference between the sum of the perimeters of the pore portions in the cross section of the support and the sum of the perimeters of the pore portions in the cross section of the main body becomes larger, the support can be more easily broken while damage to the main body is suppressed. Thus, the sum of the perimeters of the pore portions in the cross section of the support is set larger than the sum of the perimeters of the pore portions in the cross section of the main body preferably by 5,000 $\mu$m/mm$^2$ or more, more preferably by 15,000 $\mu$m/mm$^2$ or more. In terms of the buildability of the main body and/or the support, a difference between the sum of the perimeters of the pore portions in the cross section of the support and the sum of the perimeters of the pore portions in the cross section of the main body is, for example, preferably 100,000 $\mu$m/mm$^2$ or less, more preferably 75,000 $\mu$m/mm$^2$ or less, and may be 50,000 $\mu$m/mm$^2$ or less.

Further, the present inventors have focused on a standard deviation of the perimeters of the pore portions in the cross section of the support. The standard deviation of the perimeters of the pore portions in the cross section of the support is, for example, 100 or more or 200 or more, and may be 300 or more. The present inventors have found that the standard deviation of the perimeters of the pore portions in the cross section of the support is desirably 400 or more. Typically, a stress concentration point is found at a portion at which the shape changes. When the pores have large variations in size, a stress concentration point is found not only at a portion at which the shape changes due to the presence of pores but also at a portion at which a pore size changes from coarse to dense or vice versa. Thus, the stress concentration points increase in comparison to a case in which the pore size is uniform. As a result, brittle fracture is more easily caused. When the standard deviation of the perimeters of the pore portions in the cross section of the support is set to 400 or more, the brittle fracture of the support is more easily caused, and the support can be removed at a lower blast pressure. Accordingly, damage to the main body can be reduced. As the standard deviation of the perimeters of the pore portions in the cross section of the support becomes larger, the support is more easily broken. Thus, it is preferred that the standard deviation of the perimeters of the pore portions in the cross section of the support be 500 or more. When the standard deviation of the perimeters of the pore portions in the cross section of the support is set extremely large, the buildability of the support may be lowered. Thus, the standard deviation of the perimeters of the pore portions in the cross section of the support is, for example, 5,000 or less, 4,000 or less, or 1,000 or less, and may be 600 or less. A method of measuring the standard deviation of the perimeters of the pore portions in the cross section of the main body and the support in this embodiment is described later.

According to the examination conducted by the present inventors, when the powder of the ceramic material has a broad particle diameter distribution, gaps between the particles are liable to be varied in size. Thus, the standard deviation of the perimeters of the pore portions in the cross section of the support can be increased. As a method of achieving a broad particle diameter distribution, for example, a mixed powder of a plurality of ceramic powders having different median particle diameters may be used. In the plurality of ceramic materials having different median particle diameters, the material contained in the powder at a larger ratio has a higher effect in achieving a broad particle diameter distribution. As a result, the gaps between the particles are likely to be varied in size. Accordingly, the standard deviation of the perimeters of the pore portions in the cross section of the support can be increased.

Further, the present inventors have found that the perimeters of the pore portions in the cross section of the support desirably include the perimeters of 100 $\mu$m or more at 25% or more. A wall thickness between the pores is reduced by increasing the pores having relatively large sizes. As a result, brittle fracture is more easily caused. Thus, the support can be removed at a lower blast pressure. Accordingly, damage to the main body can be reduced. According to the examination conducted by the present inventors, the pores having large sizes can be increased by setting large laser scanning intervals. As a ratio of the perimeters of 100 $\mu$m or more to the perimeters of the pore portions in the cross section of the support becomes larger, the support is more easily broken. Thus, it is preferred that the perimeters of the pore portions in the cross section of the support include the perimeters of 100 $\mu$m or more at 35% or more. The large ratio of the perimeters of 100 $\mu$m or more to the perimeters of the pore portions in the cross section of the support may be, for example, 75% or less, 65% or less, or 55% or less.

<Other Steps>

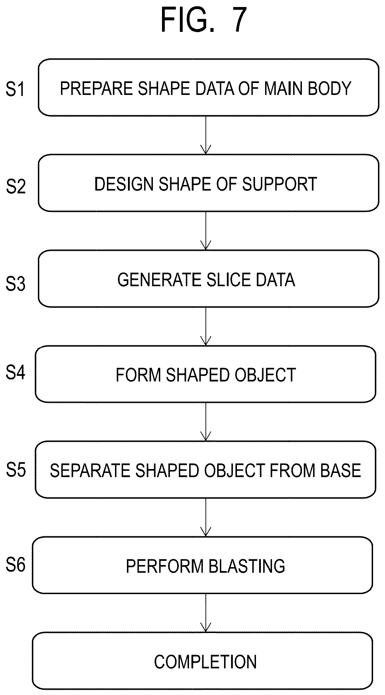

Fig. 7 is a flowchart for illustrating one example of the manufacturing method according to this embodiment. As illustrated in Fig. 7, the manufacturing method according to this embodiment may include, in addition to the layering-and-shaping step (Step S4) and the removal step (Step S6), other steps such as Step S1 to Step S3 and Step S5.

First, shape data of the main body is prepared (Step S1).

Next, a shape of the support for supporting the main body is designed based on the shape data of the main body, and shape data of the support is prepared (Step S2). For example, the support is designed to have a shape that supports an overhang portion, which is a partially outwardly extending portion of the main body, from a lower side in a forming direction, as illustrated in Fig. 2A, or a shape that surrounds the main body having a slender columnar shape, which is liable to break during a forming process, as illustrated in Fig. 2B.

Next, a three-dimensional shaping apparatus generates shape data for each layer, which is required to form the shaped object in a layer-by-layer manner, that is, slice data of the main body and the support portion (Step S3). The generated slice data is stored in a storage device (not shown) inside the three-dimensional shaping apparatus.

Next, as the layering-and-shaping step, the shaped object is formed by using the three-dimensional shaping apparatus (Step S4). As described above, the powder layer is irradiated with a laser beam based on the slice data of the main body and the support portion to thereby form the shaped object. Specifically, the three-dimensional shaped object including the main body and the support portion is formed.

After unsolidified powder is removed, the shaped object is separated from the base with use of a wire saw or the like (Step S5).

Next, as the removal step, blasting is performed on the shaped object (Step S6). The support is removed through blasting to obtain the main body. The manufacturing method may include a baking step of baking the main body after the removal step.

<Measurement Method>

[Young's modulus]

The method of measuring a Young's modulus in this embodiment is described. The Young's modulus in this embodiment is measured using a nanoindentation technique. The nanoindentation technique involves calculating a mechanical quantity from a load-displacement curve obtained by continuously measuring a load and a displacement in a process of pressing an indenter into a surface of a sample and unloading the indenter. All the Young's moduli described in this embodiment are measured under the following conditions.

·Used apparatus: a nano indenter (TI 950 TriboIndenter, manufactured by Bruker Corporation)
·Used indenter: a Berkovich indenter (model number: T1-0039, manufactured by Bruker Corporation)
·Press control system: a displacement control system (lifting operation not used)
·Maximum pressing depth: 100 nm
·Pressing rate: 10 nm/second
·Loading time: 10 seconds (press from 0 nm to 100 nm)
·Holding time: 5 seconds (constantly at 100 nm)
·Unloading time: 10 seconds (return from 100 nm to 0 nm)
·The number of times of measurement: five times

[Median Particle Diameter]

The method of measuring the median particle diameter in this embodiment is described. The median particle diameter used in this embodiment is evaluated by using a scanning electron microscope (SEM)-energy dispersive X-ray spectroscopy (EDX). The scanning electron microscope-energy dispersive X-ray spectroscopy may hereinafter be referred to as "SEM-EDX". Specifically, part of a material powder is first collected as samples, and a kind of raw material is identified by element mapping with EDX. At this time, a magnification for observation is ×500, and 20 images are obtained for each sample. For all the particles that are fully contained in the obtained images, a major axis and a minor axis are measured. An average value of the major axis and the minor axis is obtained as a primary particle diameter of each individual particle, and the primary particle diameters are added up for each of the identified kinds of raw materials. An average obtained by dividing the primary particle diameters obtained as described above by the number of particles is defined as a median particle diameter of each raw material.

[Sum of Perimeters of Pore Portions in Cross Section, and Standard Deviation of Perimeters of Pore Portions in Cross Section]

Measurement of the sum of the perimeters of the pore portions in the cross section of the main body and the sum of the perimeters of the pore portions in the cross section of the support, and the standard deviation of the perimeters of the pore portions in the cross section of the main body and the support in this embodiment are described.
The sum of the perimeters of the pore portions in the cross section of the main body and the sum of the perimeters of the pore portions in the cross section of the support are measured in the following procedure.

(1) Acquire an SEM image of a cross section of a target object.
(2) Calculate a sum total $L_n$ of perimeters of pore portions of the sectional image with software such as ImageJ.
(3) Obtain a different cross section of the target object by polishing or the like.
(4) Calculate a sum total $L_{n+1}$ of perimeters of pore portions of the different cross section through the same processes as the processes (1) and (2).
(5) Repeat the processes (1) to (4) a predetermined number of times.
(6) Define an average value of the sum totals of the measured perimeters of the pore portions as the sum of the perimeters of the pore portions of the target object.

An SEM apparatus and observation conditions are as follows.

Used apparatus: ULTRA PLUS manufactured by Carl Zeiss Microscopy GmbH
Acceleration voltage: 5.0 kV
Working distance (WD): 4.0 mm
Aperture size: 30.0 $\mu$m
Detection signal: energy and angle selective backscattered electron (EsB)
EsB Grid: 300 V
Magnification for observation: ×50
Contrast: 35.0±5.0% (reference value)
Brightness: 50.0±5.0% (reference value)
Resolution: 1,024×768

In the process (2), the sum of perimeters of dark areas with respect to a total area of a backscattered electron image was acquired by analyzing the backscattered electron image of the cross section of the target, which had been obtained by the above-mentioned technique, with image processing software ImageJ (developed by Wayne Rashand). The procedure thereof is described below.
First, the backscattered electron image is converted into an 8-bit image from "Type" in the Image menu. Next, an information display area in the SEM image is trimmed away. This can be executed by selecting an area in the SEM image except the information display area with use of a rectangle tool in the tool bar, and clicking "Crop" in the Image menu. Next, a Median diameter is set to 2.0 pixels from "Filters" in the Process menu to thereby reduce image noise. Next, "Threshold" is selected from "Adjust" in the Image menu. Then, "Default" is selected and "Auto" is clicked. After that, "Apply" is clicked to obtain a binarized image. Through this operation, the dark areas in the backscattered electron image are shown in black. In this case, the dark areas represent the pore portions in the cross section. Next, "Outline" is selected from "Binary" in the Process menu so as to extract contour lines of the pore portions. Next, a measurement item is set. The measurement item can be set through "Set Measurement" in the Analyze menu. In this embodiment, "Perimeter" is selected. Next, various items are set through "Analyze Particles" in the Analyze menu. In this embodiment, the items are set as follows.

·Size (pixel^2): from 0 to Infinity
·Circularity: from 0.00 to 1.00
·Check "Display results", "Clear results", and "Summarize".

After the items described above are set, pressing an OK button starts the measurement of the SEM image.

After the measurement is completed, "Summary" is referred to and an average value of "Perimeter" and a count number of pores are recorded. After that, the average value of "Perimeter" is multiplied by the count number and is then divided by an area of the SEM image used in the measurement to thereby calculate a value L. Further, values of "Perimeter" of all the measured pores are recorded in the "Result" window. Thus, a standard deviation D of the perimeters of the pores is calculated from the record. Further, the values L and the standard deviations D are calculated for a plurality of different cross sections, and average values $L_{ave}$ and $D_{ave}$ thereof are calculated. In this embodiment, the cross section that has been observed is polished by 1 mm to obtain a different cross section, and the value L is calculated for the different cross section. Those processes are repeated 10 times to calculate the average values $L_{ave}$ and $D_{ave}$. In this embodiment, the average value $L_{ave}$ is referred to as the sum of the perimeters of the pore portions. As can be understood from the above-mentioned calculation process, the sum of the perimeters of the pore portions is equivalent to the surface area of the internal pores of the target to be measured. Further, in this embodiment, the average value $D_{ave}$ is referred to as the standard deviation of the perimeters of the pore portions.

Percentage of the perimeters of 100 $\mu$m or more is calculated from the values of "Perimeter" of all the measured pores recorded in the "Result" window.

[Circularity]

The circularity of the media (blast media) is measured in the following procedure in this embodiment.

(1) Acquire a microscopic image of the media.
(2) Calculate an area A and a perimeter P of a media portion with software such as ImageJ. At this time, individual particles of the media appearing in an overlapped manner are excluded, and only individual particles appearing in an isolated manner are used for calculation.
(3) Calculate a circularity based on the following Equation (1).

$$\text{Circularity} = 4 \times \pi \times A/P^2 \quad \text{Equation (1)}$$

(4) Perform the calculation in the process (3) on 100 particles in the media within the microscopic image. When the number of particles of the media appearing in an isolated manner is less than 100, the above-mentioned processes (1) to (3) are repeated.
(5) Define an average value of the calculated circularities as the circularity of the media.

Acquisition conditions for the microscopic images of the media are as follows.

Used apparatus: VHX-8000 manufactured by Keyence Corporation
Magnification for observation: $\times$10

In the process (2), the area A and the perimeter P of a bright area of the microscopic image were acquired by analyzing the microscopic image, which had been obtained by the above-mentioned technique, with image processing software ImageJ (developed by Wayne Rashand). The procedure thereof is described below.

First, the microscopic image is converted into an 8-bit image from "Type" in the Image menu. Next, an information display area in the microscopic image is trimmed away. This can be executed by selecting an area in the microscopic image except the information display area with use of a rectangle tool in the tool bar, and clicking "Crop" in the Image menu. Next, a Median diameter is set to 2.0 pixels from "Filters" in the Process menu to thereby reduce image noise. Next, "Threshold" is selected from "Adjust" in the Image menu. Then, "Default" is selected and "Auto" is clicked. After that, "Apply" is clicked to obtain a binarized image. Through this operation, the bright area in the microscopic image is shown in white. In this case, the bright area represents the media portion. Next, "Outline" is selected from "Binary" in the Process menu so as to extract a contour line of the media portion. Next, a measurement item is set. The measurement item can be set through "Set Measurement" in the Analyze menu. In this embodiment, "Perimeter" is selected. Next, various items are set through "Analyze Particles" in the Analyze menu. In this embodiment, the items are set as follows.

·Size (pixel^2): from 0 to Infinity
·Circularity: from 0.00 to 1.00
·Check "Display results", "Clear results", and "Summarize".

After the items described above are set, pressing an OK button starts the measurement of the microscopic image.

After the measurement is completed, the circularities of 100 particles of the media are calculated from "Perimeter" and "Area" recorded in the "Result" window based on Equation (1). An average value of the calculated circularities is defined as the circularity of the media in this embodiment.

<Product>

A product for manufacturing a shaped object using the technology of this embodiment may include: a container storing a ceramic powder for formation; and a container storing media used for blasting performed on a shaped object that is to be formed using the ceramic powder. A Young's modulus of the media (media particles) is lower than a Young's modulus of ceramic material (ceramic particles) in the ceramic powder.

The ceramic powder may contain ceramic particles of a plurality of kinds of materials. However, it is preferred that the Young's modulus of the ceramic particles of the material contained in the ceramic powder at 30 mass% or more be used as a reference. It is preferred that the ceramic particles serving as the reference of the Young's modulus in the ceramic material powder be of a material having the largest mass in the ceramic powder. The Young's modulus of the ceramic particles is preferably 50 [GPa] or more, and is also preferably 100 [GPa]. The Young's modulus of the ceramic particles may be 1,000 [GPa] or less, 750 [GPa] or less, or 500 [GPa] or less.

The media may contain media particles of a plurality of kinds of materials. However, it is preferred that the Young's modulus of the media particles of the material contained at 30 mass% or more in the media be used as a reference. It is preferred that the media particles having a Young's modulus lower than that of the ceramic particles be made of a resin material.

When the product includes a set of the media, which are advantageous in appropriate removal of an unrequired part from the ceramic shaped object, and the ceramic powder, the product eliminates the effort required for a user of the ceramic powder to select and prepare the media, and hence can provide the user with convenience. Each of the containers is a bottle, a bag, or the like.

The container may bear an indication of the contents of the powder. Further, the product may include a document describing shaping conditions (recipe) in the formation process using the ceramic powder. The shaping conditions may include, for example, the kind (wavelength) of a laser beam, a laser output (strength), a scanning speed, and a scanning interval. Further, the shaping conditions may include, for example, a thickness of the powder layer. Further, the product may include a document describing blasting conditions. The user can form a shaped object under the shaping conditions suitable for the ceramic powder by referring to the document. The document may be an instruction manual for the product. The document may be printed matter or digital data.

[Examples]

In Table 1, formulas of the ceramic material powders used in Examples are shown. For each material powder, raw materials were mixed in a V-type mixer V20 (manufactured by TOKUJU Co., Ltd.) at 30 rpm for 30 minutes. The ceramic particles serving as a reference of the Young's modulus in the ceramic material powder are of, for example, a raw material 1 or a raw material 2 in material powders A to F in Table 1. For example, a Young's modulus of $SiO_2$ ranges from 72 [GPa] to 74 [GPa], a Young's modulus of $Al_2O_3$ ranges from 350 [GPa] to 390 [GPa], a Young's modulus of SiC ranges from 390 [GPa] to 430 [GPa], and a Young's modulus of $B_4C$ ranges from 450 [GPa] to 460 [GPa].

Table 1

| | Raw material 1 | | | Raw material 2 | | | Raw material 3 | | |
|---|---|---|---|---|---|---|---|---|---|
| | Kind | Median particle diameter [$\mu$m] | Mass [kg] | Kind | Median particle diameter [$\mu$m] | Mass [kg] | Kind | Median particle diameter [$\mu$m] | Mass [kg] |
| Material powder A | $Al_2O_3$ | 30 | 10 | $Gd_2O_3$ | 20 | 9.6 | $Tb_4O_7$ | 3 | 0.9 |
| Material powder B | $Al_2O_3$ | 30 | 10 | $SiO_2$ | 20 | 8.3 | SiO | 4 | 0.39 |
| Material powder C | SiC | 30 | 10 | $B_4C$ | 20 | 14 | - | - | - |

(continued)

| | Raw material 1 | | | Raw material 2 | | | Raw material 3 | | |
|---|---|---|---|---|---|---|---|---|---|
| | Kind | Median particle diameter [$\mu$m] | Mass [kg] | Kind | Median particle diameter [$\mu$m] | Mass [kg] | Kind | Median particle diameter [$\mu$m] | Mass [kg] |
| Material powder D | $Al_2O_3$ | 60 | 10 | $Gd_2O_3$ | 40 | 9.6 | $Tb_4O_7$ | 3 | 0.9 |
| Material powder E | $Al_2O_3$ | 30 | 10 | $Gd_2O_3$ | 30 | 9.6 | $Tb_4O_7$ | 3 | 0.9 |
| Material powder F | SiC | 20 | 10 | $B_4C$ | 20 | 14 | - | - | - |

The material powders A, D, and E each contain $Tb_4O_7$, which is a raw material 3, as a component that absorbs a laser beam to generate heat. The material powder B contains SiO, which is the raw material 3, as the component that absorbs a laser beam to generate heat. In the material powders C and F, SiC, which is the raw material 1, and $B_4C$, which is the raw material 2, absorb a laser beam to generate heat.

<Examples 1 to 21>

[Formation of Shaped Object]

Shaped objects for evaluations, which are described later, were formed. Specifically, a 3D printer Pro XDM P300 (manufactured by 3D Systems Corporation) was used to form a shaped object with a layer deposition thickness of 25 $\mu$m through the same steps as those illustrated in Fig. 4A to Fig. 4H. Blasting was performed with a blasting apparatus SFCF-3 (manufactured by Fuji Manufacturing Co., Ltd.) (nozzle diameter 7 mm). The material powders, the shaping conditions, the blasting conditions, which were used in Examples, are shown in Tables 2, 3, 4, and 5.

As described above, the jet pressure of the blasting was set to a condition that enabled the removal of the support at a predetermined speed. Specifically, a support having a cube shape with a side length of 30 mm was formed under the conditions in each of Examples. A support decrease amount [mm] was measured after blasting was performed in a vertical direction for 10 seconds on one surface of the support from a distal end of a nozzle at a position 100 mm away from the one surface. This step was performed with different jet pressures from the nozzle, and the jet pressure with which the support decrease amount of 10 mm was achieved was set as the jet pressure of each Example.

[Evaluations]

The following evaluations regarding the blasting were conducted. For the results of evaluations, a four-level evaluation scale was used in view of practicality. The ratings "Excellent, "Good", "Fair", and "Unacceptable" were represented by A, B, C, and D, respectively. The results are shown in Tables 2, 3, 4, and 5. In Examples, there were no evaluation items rated as "Unacceptable".

(1) Damage to main body

"Damage to main body" indicates the degree of influence on the shape of the main body after blasting. A main body portion having a cube shape with a side length of 30 mm was formed under the conditions of each of Examples. A decrease amount [mm] after blasting was performed for 10 seconds in the vertical direction on one surface of the main body from a position 100 mm away therefrom was measured, and was evaluated based on the following criteria.

A: Decrease amount was less than 0.05 mm

B: Decrease amount was 0.05 mm or more and less than 0.15 mm

C: Decrease amount was 0.15 mm or more and less than 0.3 mm

D: Decrease amount was 0.3 mm or more

(2) Damage to fine portions

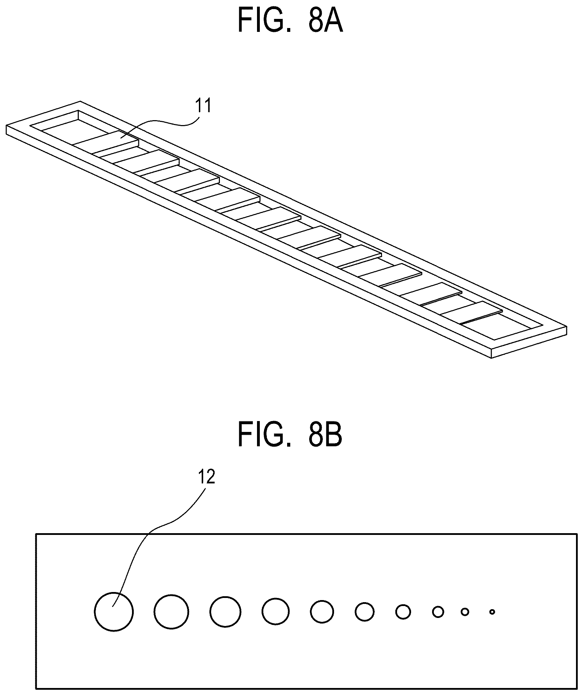

"Damage to fine portions" indicates the degree of influence on an intricate shape of the main body. A main body was formed by arranging thin plates 11 having a width of 5 mm and a height of 10 mm with different thicknesses ranging from 0.1 mm to 1 mm as illustrated in Fig. 8A. Blasting was performed in a thickness direction for 10 seconds. A shape after the blasting was evaluated based on the following criteria.

A: Minimum thickness of the thin plate that did not break during blasting was 0.3 mm or less
B: Minimum thickness of the thin plate that did not break during blasting was 0.4 mm or more and 0.6 mm or less
C: Minimum thickness of the thin plate that did not break during blasting was 0.7 mm or more and 1.0 mm or less
D: All the thin plates broke

(3) Removability of support from fine portion

"Removability of support from fine portion" indicates ease of removal of the support formed in the fine portion. Holes 12 having different diameters ranging from 0.1 mm to 1 mm were formed in a main body having a thickness of 1 mm as illustrated in Fig. 8B. A shaped object with a support was formed in each of the holes 12. The supports remaining after blasting were observed, and removability of the support was evaluated based on the following criteria. It is desirable that the supports in smaller holes be successfully removed.

A: Smallest hole from which the support was successfully removed had a diameter of 0.3 mm or less
B: Smallest hole from which the support was successfully removed had a diameter of 0.4 mm or more and 0.6 mm or less
C: Smallest hole from which the support was successfully removed had a diameter of 0.7 mm or more and 1.0 mm or less
D: Support in the hole having a diameter of 1.0 mm was not successfully removed

Table 2

| | | | Example | | | | | |
|---|---|---|---|---|---|---|---|---|
| | | | 1 | 2 | 3 | 4 | 5 | 6 |
| Material powder | | | A | B | C | A | A | B |
| Shaping conditions for main body | Laser output [W] | | 100 | 110 | 125 | 100 | 100 | 220 |
| | Scanning speed [mm/s] | | 1,000 | 1,000 | 1,000 | 1,000 | 1,000 | 2,000 |
| | Laser spot diameter [μm] | | 150 | 150 | 150 | 150 | 150 | 150 |
| | Scanning interval [μm] | | 110 | 110 | 110 | 110 | 110 | 110 |
| Shaping conditions for support | Laser output [W] | | 400 | 440 | 500 | 400 | 400 | 440 |
| | Scanning speed [mm/s] | | 4,000 | 4,000 | 4,000 | 4,000 | 4,000 | 4,000 |
| | Laser spot diameter [μm] | | 150 | 150 | 150 | 150 | 150 | 150 |
| | Scanning interval [μm] | | 110 | 110 | 110 | 110 | 110 | 110 |
| Blasting conditions | Media | Material | Nylon | Nylon | Nylon | Acrylic | Polycarbonate | Nylon |
| | | Median particle diameter [mm] | 0.2 | 0.2 | 0.2 | 0.2 | 0.2 | 0.2 |
| | | Shape | Columnar | Columnar | Columnar | Columnar | Columnar | Columnar |
| | | Circularity | 0.88 | 0.88 | 0.88 | 0.87 | 0.89 | 0.88 |
| | Jet pressure [MPa] | | 0.1 | 0.09 | 0.11 | 0.1 | 0.1 | 0.14 |

(continued)

| | | | Example | | | | | |
|---|---|---|---|---|---|---|---|---|
| | | | 1 | 2 | 3 | 4 | 5 | 6 |
| Young's modulus [GPa] | Main body | | 250 | 120 | 400 | 250 | 250 | 120 |
| | Media | | 2 | 2 | 2 | 3 | 3 | 2 |
| | Difference (main body-media) | | 248 | 118 | 398 | 247 | 247 | 118 |
| Observation of cross section | Cross section of main body | Sum of perimeters of pore portions [$\mu$m/mm$^2$] | 4,500 | 5,000 | 4,800 | 4,500 | 4,500 | 6,000 |
| | Cross section of support | Sum of perimeters of pore portions [$\mu$m/mm$^2$] | 48,000 | 50,000 | 45,000 | 48,000 | 48,000 | 50,000 |
| | | Standard deviation of perimeters of pore portions | 520 | 540 | 500 | 500 | 520 | 540 |
| | | Percentage of pore-portion perimeters of 100 $\mu$m or more [%] | 40 | 45 | 39 | 40 | 40 | 45 |
| Evaluations | Damage to main body | | A | A | A | A | A | A |
| | Damage to fine portions | | A | A | A | A | A | A |
| | Removability of support from narrow hole portion | | A | A | A | A | A | A |

Table 3

| | | | Example | | | | | | |
|---|---|---|---|---|---|---|---|---|---|
| | | | 7 | 8 | 9 | 10 | 11 | 12 | 13 |
| Material powder | | | A | A | B | C | A | A | A |
| Shaping conditions for main body | Laser output [W] | | 100 | 100 | 110 | 125 | 100 | 100 | 100 |
| | Scanning speed [mm/s] | | 1,000 | 1,000 | 1,000 | 1,000 | 1,000 | 1,000 | 1,000 |
| | Laser spot diameter [$\mu$m] | | 150 | 150 | 150 | 150 | 150 | 150 | 150 |
| | Scanning interval [$\mu$m] | | 110 | 110 | 110 | 110 | 110 | 110 | 110 |
| Shaping conditions for support | Laser output [W] | | 400 | 400 | 440 | 500 | 400 | 250 | 200 |
| | Scanning speed [mm/s] | | 4,000 | 4,000 | 4,000 | 4,000 | 4,000 | 2,500 | 2,000 |
| | Laser spot diameter [$\mu$m] | | 150 | 150 | 150 | 150 | 150 | 150 | 150 |
| | Scanning interval [$\mu$m] | | 110 | 110 | 110 | 110 | 110 | 110 | 110 |

(continued)

| | | | Example | | | | | | |
|---|---|---|---|---|---|---|---|---|---|
| | | | 7 | 8 | 9 | 10 | 11 | 12 | 13 |
| Blasting conditions | Media | Material | Nylon | Acrylic | Zinc | Alumin a | Nylon | Nylon | Nylon |
| | | Median particle diameter [mm] | 0.2 | 0.2 | 0.2 | 0.2 | 4 | 0.2 | 0.2 |
| | | Shape | Columnar | Columnar | Spherical | Spherical | Columnar | Columnar | Columnar |
| | | Circularity | 0.88 | 0.86 | 0.96 | 0.98 | 0.88 | 0.88 | 0.88 |
| | Jet pressure [MPa] | | 0.1 | 0.09 | 0.09 | 0.11 | 0.1 | 0.2 | 0.65 |
| Young's modulus [GPa] | Main body | | 250 | 250 | 120 | 400 | 250 | 250 | 250 |
| | Media | | 18 | 25 | 80 | 375 | 2 | 2 | 2 |
| | Difference (main body-media) | | 232 | 225 | 40 | 25 | 248 | 248 | 248 |
| Observation of cross section | Cross section of main body | Sum of perimeters of pore portions [$\mu$m/mm$^2$] | 4,500 | 4,500 | 5,000 | 4,800 | 4,500 | 4,500 | 4,500 |
| | Cross section of support | Sum of perimeters of pore portions [$\mu$m/mm$^2$] | 48,000 | 48,000 | 50,000 | 45,000 | 48,000 | 24,000 | 6,000 |
| | | Standard deviation of perimeters of pore portions | 520 | 520 | 540 | 500 | 520 | 520 | 520 |
| | | Percentage of pore-portion perimeters of 100 $\mu$m or more [%] | 40 | 40 | 45 | 39 | 40 | 40 | 40 |
| Evaluations | Damage to main body | | A | A | A | C | A | A | A |
| | Damage to fine portions | | A | B | B | B | A | A | C |
| | Removability of support from narrow hole portion | | A | A | A | A | C | A | A |

Table 4

| | Example | | | | |
|---|---|---|---|---|---|
| | 14 | 15 | 16 | 17 | 18 |
| Material powder | D | E | A | A | F |

(continued)

| | | | Example | | | | |
|---|---|---|---|---|---|---|---|
| | | | 14 | 15 | 16 | 17 | 18 |
| Shaping conditions for main body | Laser output [W] | | 100 | 100 | 100 | 280 | 125 |
| | Scanning speed [mm/s] | | 1,000 | 1,000 | 1,000 | 1500 | 1,000 |
| | Laser spot diameter [μm] | | 150 | 150 | 150 | 150 | 150 |
| | Scanning interval [μm] | | 110 | 110 | 110 | 110 | 110 |
| Shaping conditions for support | Laser output [W] | | 250 | 400 | 400 | 200 | 250 |
| | Scanning speed [mm/s] | | 2,500 | 4,000 | 4,000 | 2,500 | 2,000 |
| | Laser spot diameter [μm] | | 150 | 150 | 150 | 60 | 150 |
| | Scanning interval [μm] | | 110 | 110 | 55 | 80 | 110 |
| Blasting conditions | Media | Material | Nylon | Nylon | Nylon | Nylon | Alumina |
| | | Median particle diameter [mm] | 0.2 | 0.2 | 0.2 | 0.2 | 4 |
| | | Shape | Columnar | Columnar | Columnar | Columnar | Spherical |
| | | Circularity | 0.88 | 0.88 | 0.88 | 0.88 | 0.98 |
| | Jet pressure [MPa] | | 0.2 | 0.6 | 0.55 | 0.6 | 0.65 |
| Young's modulus [GPa] | Main body | | 250 | 250 | 250 | 250 | 400 |
| | Media | | 2 | 2 | 2 | 2 | 375 |
| | Difference (main body-media) | | 248 | 248 | 248 | 248 | 25 |
| Observation of cross section | Cross section of main body | Sum of perimeters of pore portions [μm/mm$^2$] | 6,500 | 5,000 | 5,000 | 5,000 | 5,000 |
| | Cross section of support | Sum of perimeters of pore portions [μm/mm$^2$] | 8,000 | 8,000 | 48,000 | 12,000 | 6,000 |
| | | Standard deviation of perimeters of pore portions | 520 | 250 | 520 | 350 | 350 |
| | | Percentage of pore-portion perimeters of 100 μm or more [%] | 55 | 40 | 20 | 40 | 20 |
| Evaluations | Damage to main body | | B | A | A | A | B |
| | Damage to fine portions | | A | B | B | B | B |
| | Removability of support from narrow hole portion | | A | A | A | A | C |

Table 5

| | Example | | |
|---|---|---|---|
| | 19 | 20 | 21 |
| Material powder | A | A | A |

17

(continued)

| | | | | Example | | |
|---|---|---|---|---|---|---|
| | | | | 19 | 20 | 21 |
| Shaping conditions for main body | | Laser output [W] | | 100 | 100 | 100 |
| | | Scanning speed [mm/s] | | 1,000 | 1,000 | 1,000 |
| | | Laser spot diameter [μm] | | 150 | 150 | 150 |
| | | Scanning interval [μm] | | 110 | 110 | 110 |
| Shaping conditions for support | | Laser output [W] | | 400 | 400 | 400 |
| | | Scanning speed [mm/s] | | 4,000 | 4,000 | 4,000 |
| | | Laser spot diameter [μm] | | 150 | 150 | 150 |
| | | Scanning interval [μm] | | 110 | 110 | 110 |
| Blasting conditions | Media | Material | | Nylon | Glass | Glass |
| | | Median particle diameter [mm] | | 0.2 | 0.2 | 0.2 |
| | | Shape | | Crushed | Spherica I | Crushed |
| | | Circularity | | 0.75 | 0.97 | 0.73 |
| | Jet pressure [MPa] | | | 0.1 | 0.1 | 0.1 |
| Young's modulus [GPa] | | Main body | | 250 | 250 | 250 |
| | | Media | | 2 | 72 | 72 |
| | | Difference (main body-media) | | 248 | 178 | 178 |
| Observation of cross section | Cross section of main body | Sum of perimeters of pore portions [μm/mm$^2$] | | 4,500 | 4,500 | 4,500 |
| | Cross section of support | Sum of perimeters of pore portions [μm/mm$^2$] | | 48,000 | 48,000 | 48,000 |
| | | Standard deviation of perimeters of pore portions | | 520 | 520 | 520 |
| | | Percentage of pore-portion perimeters of 100 μm or more [%] | | 40 | 40 | 40 |
| Evaluations | | Damage to main body | | B | A | B |
| | | Damage to fine portions | | A | B | B |
| | | Removability of support from narrow hole portion | | A | A | A |

[Examples 1 to 6]

Examples 1 to 6 are examples in which a difference between the Young's modulus of the main body and the Young's modulus of the media was set equal to 30 GPa or more. Practically favorable evaluation results were obtained for all of Examples 1 to 6.

[Examples 7 and 8]

Examples 7 and 8 are examples in which a resin having an adjusted molecular weight was used as media so as to achieve a Young's modulus higher than that in Example 1. In Example 7 in which the Young's modulus of the media was 20 [GPa] or less, practically favorable results were obtained. Meanwhile, in Example 8 in which the Young's modulus of the media was more than 20 [GPa], slight damage was observed in the fine portions, but was at a level that posed no practical problem.

[Example 9]

Example 9 is an example in which a non-resin material was used as the media. Slight damage occurred in the fine portions because the media did not have an elastic structure, but the damage was at a level that posed no practical problem.

[Example 10]

Example 10 is an example in which a ceramic material was used as the media, which had a Young's modulus higher than that of the media used in Example 8. A difference between the Young's modulus of the main body and the Young's modulus of the media was less than 30 [GPa]. Thus, the main body was slightly abraded and damage was observed. However, the damage was at a level that posed no practical problem. Further, due to a high Young's modulus of the media, slight damage occurred in the fine portions. However, the damage was also at a level that posed no practical problem.

[Example 11]

Example 11 is an example in which media having a median particle diameter of 4 mm, which was larger than that of the media used in Example 1, were used as the media. The supports in the small holes were not successfully removed. However, the support in the hole having a diameter of 1 mm was successfully removed. Thus, no practical problem arose.

[Examples 12 and 13]

Examples 12 and 13 are examples in which the shaping conditions for the support portion were changed so that the sum of the perimeters of the pore portions obtained by observing the cross sections of the support was set smaller than that in Example 1. In Example 12 in which the sum of the perimeters of the pore portions of the support was 7,000 [$\mu$m/mm$^2$] or more, practically favorable results were obtained. In Example 13 in which the sum of the perimeters of the pore portions of the support was less than 7,000 [$\mu$m/mm$^2$], the jet pressure was required to be increased so as to remove the support. Slight damage occurred in the fine portions due to the influence of the higher jet pressure, but was at a level that posed no practical problem.

[Example 14]

In Example 14, the material powder D containing the raw materials 1 and 2 with median particle diameters larger than those of the raw materials 1 and 2 in the material powder A was used to increase the median particle diameter of the material powder so as to enlarge the pores in the main body. In addition, the shaping conditions for the support were changed to reduce the sum of perimeters of the pore portions of the support. Thus, a difference between the sum of the perimeters of the pore portions in the cross section of the main body and the sum of the perimeters of the pore portions in the cross section of the support was less than 2,000 $\mu$m/mm$^2$. In this Example, susceptibility of the support to brittle fracture and susceptibility of the main body to brittle fracture were closer to each other than in Example 1. Further, due to large internal pores in the main body, brittle fracture slightly occurred also in the main body during blasting. Thus, damage was observed in the main body, but was at a level that posed no practical problem.

[Example 15]

Example 15 is an example in which the material powder E containing the raw material 2 with a median particle diameter larger than that of the raw material 2 in the material powder A was used to change a combination of the median particle diameters in the material powder so as to set the standard deviation of the perimeters of the pore portions in the cross section of the support to less than 400. In this Example, the support was less easily broken. Thus, the jet pressure was required to be increased in order to remove the support. Slight damage occurred in the fine portions under the influence of the higher jet pressure, but was at a level that posed no practical problem.

[Example 16]

Example 16 is an example in which the scanning interval of the laser beam on the support portion was changed so that percentage of the pore-portion perimeters of 100 $\mu$m or more in the cross section of the support was less than 25%. In this Example, brittle fracture was caused less easily than in Example 1. Thus, the jet pressure was required to be increased in order to remove the support. Slight damage occurred in the fine portions under the influence of the higher jet pressure, but was at a level that posed no practical problem.

[Example 17]

Example 17 is an example in which the output of the laser beam for forming the support was lower than the output of the laser beam for forming the main body. In this Example, the support was less easily broken than in Example 1. Thus, the jet pressure was required to be increased in order to remove the support. Slight damage occurred in the fine portions under the influence of the higher jet pressure, but was at a level that posed no practical problem.

[Example 18]

In Example 18, percentage of the pore-portion perimeters of 100 $\mu$m or more in the cross section of the support was set to less than 25% by using the material powder F containing the raw material 1 with the median particle diameter smaller than that of the raw material 1 in the material powder C. Further, the shaping conditions for the support were changed, and the sum of the perimeters of the pore portions obtained through the observation of the cross sections of the support was smaller than that in Example 3. Further, alumina, which had a Young's modulus higher than that of the media used in Example 3, was used, and a difference in Young's modulus between the support and the media was less than 30 [GPa]. Further, the median particle diameter of the media was 4 mm. In this Example, brittle fracture was caused less easily than in the support of Example 1, and thus the jet pressure was required to be increased in order to remove the support. Slight damage occurred in the fine portions under the influence of the higher jet pressure. Further, due to a difference of less than 30 [GPa] between the Young's modulus of the main body and the Young's modulus of the media, the main body was slightly abraded, and hence damage was observed. Further, the media had a median particle diameter larger than that of the media used in Example 1. Thus, the supports in the small holes were not successfully removed. However, the support in the hole having a diameter of 1 mm was successfully removed. Although slight damage or the like was observed, the damage or the like was at a level that posed no practical problem.

[Example 19]

Example 19 is the same as Example 1 except that the media had a crushed shape. The circularity of the media in this Example was 0.75. In this Example, abrasivity was increased due to the crushed shape of the media in comparison to that in Example 1. Damage was observed in the main body due to the abrasion of the main body during blasting, but was at a level that posed no practical problem.

[Example 20]

Example 20 is an example in which glass was used as a material of the media. The circularity of the media in this Example was 0.97. In this Example, the media did not have an elastic structure, and hence slight damage occurred in the fine portions. However, the damage was at a level that posed no practical problem.

[Example 21]

Example 21 is an example in which glass having a crushed shape was used as the media. The circularity of the media in this Example was 0.73. In this Example, the media did not have an elastic structure, and hence slight damage occurred in the fine portions. However, the damage was at a level that posed no practical problem. Further, in this Example, abrasivity was increased due to the crushed shape of the media. Damage was observed in the main body due to the abrasion of the main body during blasting, but was at a level that posed no practical problem.

<Comparative Examples 1 to 8>

Shaped objects were formed and evaluated in the same manner as in Examples except that the material powder, the shaping conditions, and the blasting conditions were changed to those in Tables 6-1 and 6-2. The results of evaluations are shown in Tables 6-1 and 6-2. Problems occurred in all Comparative Examples, and the results were evaluated as being not acceptable. A negative value of the difference in Young's modulus in Tables 6-1 and 6-2 indicates that the Young's modulus of the media was higher than that of the main body.

Table 6-1

| | | | Comparative Example | | | |
|---|---|---|---|---|---|---|
| | | | 1 | 2 | 3 | 4 |
| Material powder | | | A | B | SUS 630 | A |
| Shaping conditions for main body | Laser output [W] | | 100 | 110 | 300 | 100 |
| | Scanning speed [mm/s] | | 1,000 | 1,000 | 2,500 | 1,000 |
| | Laser spot diameter [μm] | | 150 | 150 | 150 | 150 |
| | Scanning interval [μm] | | 110 | 110 | 100 | 110 |
| Shaping conditions for support | Laser output [W] | | 400 | 440 | 100 | Without Support |
| | Scanning speed [mm/s] | | 4,000 | 4,000 | 2,500 | |
| | Laser spot diameter [μm] | | 150 | 150 | 150 | |
| | Scanning interval [μm] | | 110 | 110 | 100 | |
| Blasting conditions | Media | Material | Silicon carbide | SUS 304 | Nylon | - |
| | | Median particle diameter [mm] | 0.2 | 0.2 | 0.2 | - |
| | | Shape | Crushed | Spherical | Columnar | - |
| | | Circularity | 0.76 | 0.92 | 0.88 | - |
| | Jet pressure [MPa] | | 0.18 | 0.2 | 0.7 | - |
| Young's modulus [GPa] | Main body | | 250 | 120 | 200 | 250 |
| | Media | | 400 | 200 | 2 | - |
| | Difference (main body-media) | | -150 | -80 | 198 | - |
| Observation of cross section | Cross section of main body | Sum of perimeters of pore portions [μm/mm²] | 4,500 | 5,000 | 4,500 | 4,500 |
| | Cross section of support | Sum of perimeters of pore portions [μm/mm²] | 48,000 | 50,000 | 48,000 | - |
| | | Standard deviation of perimeters of pore portions | 520 | 540 | 520 | - |
| | | Percentage of pore-portion perimeters of 100 μm or more [%] | 40 | 45 | 40 | - |
| Evaluations | Damage to main body | | D | D | Supports unremovable by blasting | Breakage of main body during formation |
| | Damage to fine portions | | D | D | | |
| | Removability of support from narrow hole portion | | Not evaluable | Not evaluable | | |

Table 6-2

| | Comparative Example | | | |
|---|---|---|---|---|
| | 5 | 6 | 7 | 8 |
| Material powder | A | A | Aluminum | SUS 630 |

(continued)

| | | | Comparative Example | | | |
|---|---|---|---|---|---|---|
| | | | 5 | 6 | 7 | 8 |
| Shaping conditions for main body | | Laser output [W] | 100 | 100 | 300 | 300 |
| | | Scanning speed [mm/s] | 1,000 | 1,000 | 2,500 | 2,500 |
| | | Laser spot diameter [$\mu$m] | 150 | 150 | 150 | 150 |
| | | Scanning interval [$\mu$m] | 110 | 110 | 100 | 100 |
| Shaping conditions for support | | Laser output [W] | 400 | 100 | 100 | 100 |
| | | Scanning speed [mm/s] | 4,000 | 1,000 | 2,500 | 2,500 |
| | | Laser spot diameter [$\mu$m] | 150 | 150 | 150 | 150 |
| | | Scanning interval [$\mu$m] | 110 | 110 | 100 | 100 |
| Blasting conditions | Media | Material | Support removed with hand grinder | Support removed with hand grinder | SUS 304 | Aluminum |
| | | Median particle diameter [mm] | | | 0.2 | 0.2 |
| | | Shape | | | Spherical | Spherical |
| | | Circularity | | | 0.94 | 0.93 |
| | Jet pressure [MPa] | | | | 0.18 | 0.65 |
| Young's modulus [GPa] | | Main body | 250 | 250 | 70 | 200 |
| | | Media | - | - | 200 | 70 |
| | | Difference (main body-media) | - | - | -130 | 130 |
| Observation of cross section | Cross section of main body | Sum of perimeters of pore portions [$\mu$m/mm$^2$] | 4,500 | 4,500 | 5,000 | 5,000 |
| | Cross section of support | Sum of perimeters of pore portions [$\mu$m/mm$^2$] | 48,000 | 4,500 | 50,000 | 50,000 |
| | | Standard deviation of perimeters of pore portions | 520 | 100 | 540 | 540 |
| | | Percentage of pore-portion perimeters of 100 $\mu$m or more [%] | 40 | 10 | 45 | 45 |
| Evaluations | | Damage to main body | Breakage of main body during removal of support | Breakage of main body during removal of support | D | D |
| | | Damage to fine portions | | | D | D |
| | | Removability of support from narrow hole portion | | | Not evaluable | Not evaluable |

[Comparative Example 1]

In this Comparative Example, the material powder A, which was the same as that used in Example 1, was used as the material powder, and the shaping conditions were the same as those in Example 1. Further, in this Comparative Example, media made of silicon carbide having a median particle diameter of 0.2 mm were used. As is understood from Tables 6-1 and 6-2, the Young's modulus of the media was higher than that of the main body in this Comparative Example.
In this Comparative Example, the Young's modulus of the media was higher than that of the main body. Thus, damage to the main body and damage to the fine portions occurred during blasting. Further, "removability of support from fine portion" was not evaluable due to breakage of the main body portion around the support.

[Comparative Example 2]

In this Comparative Example, the material powder B, which was the same as that used in Example 2, was used as the material powder, and the shaping conditions were the same as those in Example 2. Further, in this Comparative Example, media made of stainless steel having a median particle diameter of 0.2 mm were used. As is understood from Tables 6-1 and 6-2, the Young's modulus of the media was higher than that of the main body also in this Comparative Example.

In this Comparative Example, the Young's modulus of the media was higher than that of the main body. Thus, damage to the main body and damage to the fine portions occurred during blasting. Further, "removability of support from fine portion" was not evaluable due to breakage of the main body portion around the support.

[Comparative Example 3]

In this Comparative Example, a metal powder (SUS630) having a median particle diameter of 18 $\mu$m was used as the material powder. Further, in this Comparative Example, media made of nylon having a median particle diameter of 0.2 mm were used.

In this Comparative Example, the metal powder was used as the material powder. Thus, the support was plastically deformed, was not successfully broken during blasting even at the jet pressure having a maximum value, and was unevaluable.

[Comparative Example 4]

In this Comparative Example, the same material powder A as that used in Example 1 was used as the material powder, and the shaping conditions for the main body portion and the media were the same as those used in Example 1. In this Comparative Example, the support portion was not formed, and only the main body portion was formed.

In this Comparative Example, due to the absence of the support portion, the main body broke during the formation, and evaluations were not possible.

[Comparative Example 5]

In this Comparative Example, the same material powder A as that used in Example 1 was used as the material powder. The shaping conditions for the main body portion and the shaping conditions for the support portion were the same as those in Example 1. In this Comparative Example, the support portion was removed not by blasting but with a hand grinder.

In this Comparative Example, the support was removed with a hand grinder. Thus, when the hand grinder accidentally came into contact with the main body portion, the main body broke.

[Comparative Example 6]

In this Comparative Example, a lattice shape formed by a combination of slender columns was used for the support. In this case, shaping conditions for the support having a lattice shape were the same as those for the main body. In this Comparative Example, the support portion was removed not by blasting but with a hand grinder.

In this Comparative Example, the support was removed with a hand grinder. Thus, when the hand grinder accidentally came into contact with the main body portion, the main body broke.

[Comparative Example 7]

In this Comparative Example, a metal powder (aluminum) was used as the material powder, and the shaping conditions were also the same as those in Comparative Example 3. Further, in this Comparative Example, media made of SUS304 having a median particle diameter of 0.2 mm were used.

In this Comparative Example, the Young's modulus of the media was higher than that of the main body. Thus, damage to the main body and damage to the fine portions occurred during blasting. Further, "removability of support from fine portion" was not evaluable due to breakage of the main body portion around the support.

[Comparative Example 8]

In this Comparative Example, a metal powder (SUS630), which was the same as that used in Comparative Example 3, was used as the material powder, and the shaping conditions were also the same as those in Comparative

23

Example 3. Further, in this Comparative Example, media made of aluminum having a median particle diameter of 0.2 mm were used.

In this Comparative Example, the metal powder was used as the material powder. Thus, the support was plastically deformed, and thus failed to cause brittle fracture. Accordingly, the support was not successfully removed without increasing the jet pressure in blasting. Due to the high jet pressure in blasting, damage to the main body and damage to the fine portions occurred. Further, "removability of support from fine portion" was unevaluable because the main body portion around the support broke.

Various embodiments have been described in detail above but it will be understood that the present disclosure is not limited to these embodiments and encompasses all modifications, variants, alternatives and equivalents falling within the scope of the appended claims.

## Claims

1. A method of manufacturing a three-dimensional shaped object, the method comprising:

    a layering-and-shaping step of forming a layered-and-shaped object by layering-and-shaping manufacture using a ceramic powder, the layered-and-shaped object including a first part (1) and a second part (2) positioned in the vicinity of the first part (1); and
    a removal step of removing the second part (2) of the layered-and-shaped object while leaving the first part (1) thereof by blasting, wherein a media is caused to collide against the layered-and-shaped object,
    wherein the media comprises media particles of a material having a Young's modulus lower than a Young's modulus of the first part (1).

2. The method of manufacturing a three-dimensional shaped object according to claim 1, wherein a difference between the Young's modulus of the media material and the Young's modulus of the first part (1) is 30 [GPa] or more.

3. The method of manufacturing a three-dimensional shaped object according to claim 1 or 2, wherein the Young's modulus of the media material is 20 [GPa] or less.

4. The method of manufacturing a three-dimensional shaped object according to any one of claims 1 to 3, wherein the Young's modulus of the first part (1) is 50 [GPa] or more.

5. The method of manufacturing a three-dimensional shaped object according to any one of claims 1 to 4, wherein the media material is a resin material.

6. The method of manufacturing a three-dimensional shaped object according to any one of claims 1 to 5, wherein the media particles have a median particle diameter of 3 mm or less.

7. The method of manufacturing a three-dimensional shaped object according to any one of claims 1 to 6, wherein the media particles have a circularity of 0.75 or more and 1 or less.

8. The method of manufacturing a three-dimensional shaped object according to any one of claims 1 to 7, wherein a sum of perimeters of pore portions in a cross section of the second part (2) is larger than a sum of perimeters of pore portions in a cross section of the first part (1).

9. The method of manufacturing a three-dimensional shaped object according to any one of claims 1 to 8,

    wherein a sum of perimeters of pore portions in a cross section of the second (2) part is 7,000 $\mu$m/mm$^2$ or more,
    wherein a sum of perimeters of pore portions in a cross section of the second part (2) is larger than a sum of perimeters of pore portions in a cross section of the first part (1) by 2,000 $\mu$m/mm$^2$ or more,
    wherein a standard deviation of perimeters of pore portions in a cross section of the second part (2) is 400 or more, and/or
    wherein perimeters of pore portions in a cross section of the second part (2) include the perimeters of 100 $\mu$m or more at 25% or more.

10. The method of manufacturing a three-dimensional shaped object according to any one of claims 1 to 9, further comprising baking the first part (1) after the removal step.

24

11. The method of manufacturing a three-dimensional shaped object according to any one of claims 1 to 10, wherein the Young's modulus of the media material is lower than a Young's modulus of the second part (2).

12. The method of manufacturing a three-dimensional shaped object according to claim 1 or 2, wherein the first part (1) is a main body and the second part (2) is a support.

13. The method of manufacturing a three-dimensional shaped object according to any one of claims 1 to 12, wherein the layering-and-shaping step comprises:

> a placing step of placing a ceramic powder;
> a step of forming the first part (1) by irradiating the ceramic powder with a laser beam; and
> a step of forming the second part (2) by irradiating the ceramic powder with a laser beam.

14. The method of manufacturing a three-dimensional shaped object according to claim 13, wherein a condition for irradiation with the laser beam in the step of forming the first part (1) and a condition for irradiation with the laser beam in the step of forming the second part (2) are different.

15. The method of manufacturing a three-dimensional shaped object according to claim 14, wherein an output of the laser beam in the step of forming the second part (2) is higher than an output of the laser beam in the step of forming the first part (1), and a scanning speed of the laser beam in the step of forming the second part (2) is higher than a scanning speed of the laser beam in the step of forming the first part (1).

16. The method of manufacturing a three-dimensional shaped object according to any one of claims 1 to 15, wherein a porosity of the second part is higher than a porosity of the first part.

17. A product comprising:

> a container storing a ceramic powder; and
> a container storing a media used for blasting performed on a shaped object that is to be formed using the ceramic powder,
> wherein the media comprises media particles of a material having a Young's modulus lower than a Young's modulus of ceramic material in the ceramic powder.

18. The product according to claim 17,

> wherein the ceramic powder is a mixed powder of a plurality of different kinds of ceramic powders, and
> wherein the media particles are made of a resin material.

19. The product according to claim 17 or 18, further comprising a document describing shaping conditions in the formation process.

# FIG. 1

# FIG. 2A

# FIG. 2B

# FIG. 3

FIG. 4A

FIG. 4B

FIG. 4C

FIG. 4D

FIG. 4E

FIG. 4F

FIG. 4G

FIG. 4H

# FIG. 5

## FIG. 6A

## FIG. 6B

# FIG. 7

S1 | PREPARE SHAPE DATA OF MAIN BODY

↓

S2 | DESIGN SHAPE OF SUPPORT

↓

S3 | GENERATE SLICE DATA

↓

S4 | FORM SHAPED OBJECT

↓

S5 | SEPARATE SHAPED OBJECT FROM BASE

↓

S6 | PERFORM BLASTING

↓

COMPLETION

# FIG. 8A

11

# FIG. 8B

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018095946 A
- JP 2016113701 A